# EUROPEAN PATENT APPLICATION

(11) **EP 1 316 776 A2**
(43) Date of publication of application: **04.06.2003**
(21) Application number: 02079862.5
(22) Date of filing: 25.10.2002
(51) Int. Cl.: G01B 5/00

(54) **Device for assessing an animal's weight by measuring the girth**

(30) Priority: 01.11.2001 NL 1019274
(71) Applicant: Van de Crommert, Adrianes Joannes Antonius Maria, 5469 SN Erp (NL)
(72) Inventor: Van de Crommert, Adrianes Joannes Antonius Maria, 5469 SN Erp (NL)

(57) **Abstract**

The invention refers to a device for determining the weight of an animal by measuring the circumference of its chest. The device consists of a fixed arch, on both ends of the arch, hinged extensions are attached and the end points of a measuring tape are connected to these. A casing is attached to the arch with a handle. The casing contains a sliding part and a measuring element to pull the measuring tape tight in order to measure the circumference. The device is fitted with a scale in order to read off the value. The measuring element is fitted with a restraining mechanism so that the value can still be read off once the device has been removed.

## Description

This invention refers to an appliance for measuring the chest circumference of an animal in order to determine its weight.

An appliance for measuring the chest circumference of an animal is, for instance, already registered as Dutch patent specification no. 1011049.

This appliance, however, is not effective in practical situations because the spring load in the meter and the friction of the measuring tape against the animal'skin work against each other. This makes it difficult to determine when the end points are touching each other and when the actual measurement occurs. Because of the large amount of friction, the softer parts of the animal are subject to a certain amount of constriction, which results in incorrect measurements.

Another disadvantage is that the equipment has to be operated with both hands and has to be attached to the animal for long enough to allow the operator to read off the measurement. Given the high level of mobility of unrestrained pigs, this represents a problem.

The objective of the invention described in this document is to address the problem described above and to produce a device that is simple to use, can be operated with one hand and that, due to the absence of friction between measuring tape and the animal's skin, produces an accurate and reliable measurement. The measurement also has to be made quickly and, for this reason, the value measured should read off after the measurement has been taken.

The device described in this invention consists of a tubular frame curved in a fixed arch which forms an extended half-circle. A casing is fixed in the middle of the arch, and a handle is attached to the casing. At both end points of the arch, two extension metal pieces that are curved in the same shape as the tubular frame are attached with hinges. If the hinged extension pieces, which hang vertically when not being used, are closed then the tubular frame and the extension pieces form an arch that is more or less in the form of a circle and which can encompass even the heaviest animals. In the casing, there is a sliding part that automatically pulls the hinged extension pieces up and towards each other using the measuring tape that is attached to the extension pieces. For this purpose, the sliding part is fitted with a plate that comes into contact with the pig's back during measurement. When measuring, the device is held loosely around the animal with the handle. The device is then pushed down with the plate positioned on the back of the pig. If the device is pressed further downwards, the sliding part is pressed into the casing and the measuring tape that is attached to the hinged extension pieces pulls them upwards. The end points of the extension pieces move towards each other and make contact under the chest of the pig at the moment the measurement takes place. In this way, the measuring tape that is attached to both end points of the hinged extension pieces is placed flat on the pigs chest without any friction and risk of constriction.

In the sliding part there is a measuring element that is also adjustable. This measuring element is kept at the highest possible value by a spring. The measuring tape runs over this measuring element. The pressure from the spring ensures that the measuring tape is pulled tight and the measuring element is pulled in a downward direction against the pressure of the spring to a greater or lesser extent. The position of the measuring element can be read off in a display window in the sliding part. The circumference of the animal is displayed in a scale on the measuring element and this makes it possible to determine the weight of the animal.

In order to give the operator the option to read off this value after the measurement has been taken, the measuring element has been fitted with a restraining and release mechanism. On the upper side of the measuring element, a restraining rod is attached. This rod can move up and down through the opening of a restraint which has the form of a slot with opening as mentioned above for the restraining rod, a hinge in the casing, a spring under this hinge and a pressure pad. The spring brings the restraint into such a position that the restraining rod and with it the measuring element can only move in a downward direction. The measuring tape can then be pulled downwards during measurement, against the pressure applied by the measuring element spring. The measuring element can only be moved in an upward direction if the sliding part on which the measuring element is mounted is completely retracted into the casing. In this case, the bottom of the casing will press the pressure pad of the restraining device, against the pressure of the spring, which will position the opening of the restraining device around the restraint rod in such a position that no friction is generated and allow it to move upwards. The measuring tape can then position itself around the chest of the pig in the correct manner. The operator carrying out the measurement can then determine whether the device is positioned in the correct way and in the correct place. If this is the case, he can remove the device from the pig by pulling it upwards. The sliding element emerges partly from the casing and fixes the measuring element. The pig farmer does not, therefore, have to bend down to read off the scale while the device is still placed around the pig but has ample opportunity to read off the value on the scale after the device has been removed from the animal.

An example of the invention in question will now be illustrated using a number of diagrams. These diagrams do not constitute a restriction of the amount of patent protection afforded.

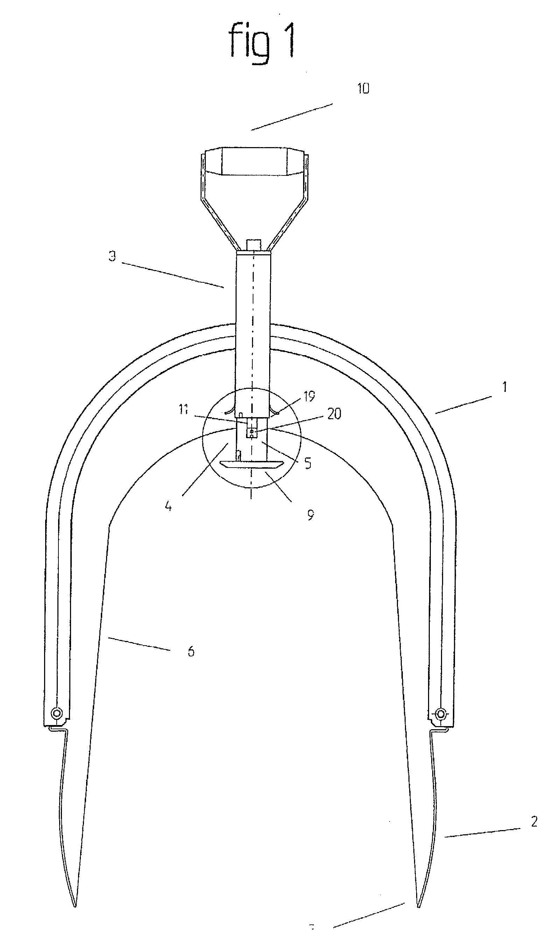

Diagram 1 shows an illustration of a special model of the device for measuring the chest circumference of an animal using the invention in question.

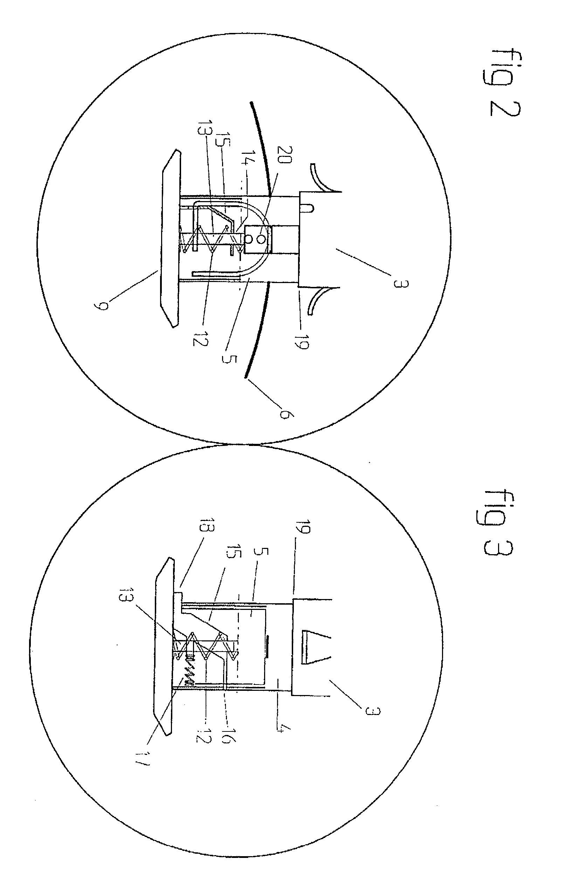

Diagram 2 shows a detailed drawing of Diagram 1 from the front.
Diagram 3 shows the same detail from Diagram 1 from the side.

The invention in question consists of a tubular frame (1) with two hinged extension pieces (2). A casing (3) is fixed on the arch, with a sliding part (4) in which the adjustable measuring element (5) is housed. The measuring tape (6) is adjustable and fixed to the end points (7) of the hinged extension pieces (2). The measuring tape (6) runs over the top of the measuring element (5) which is kept at the highest value by the spring (12). The measuring tape (6) is made of spring steel which has the advantage of being strong, prevents the tape from becoming tangled and ensures that the measuring tape is laid across the pig in a straight line and, in this manner, always measures the shortest line. The sliding part is fitted with a plate (9) that is placed behind the shoulder blade on the pig's back while the measurement is being taken.
The measuring element (5) is fitted with a restraining rod (13). The restraining rod runs through the opening (14) of the restraining device (15), which is fixed in the sliding part (4) with a hinge (16). The spring (17) ensures that the opening (14) of the restraining device (15) is positioned so that the restraining rod (13) and therefore the measuring element (5) can only be moved in an upward direction.
The restraining device (15) also contains a pressure pad (18) which can pushed in the bottom (19) of the casing (3) against the pressure of the spring (17). The sliding part has a display window (11) through which the scale (20) of the measuring element (5) can be seen so that the values measured can be read off.

When measuring an animal, the operator holds the handle (10) in one hand, places the plate (9) behind the shoulder blades of the animal's back and presses the device downwards onto the animal. The sliding part (5) in the device will now be pushed upwards. The measuring tape (6) that is attached pulls both hinged extension pieces upwards and towards each other. This causes the measuring tape to be placed around the animal's chest. The two extension tubes (2) remain attached to each other on the animal's chest during the entire measurement. The measuring element (5) is now, depending on the size of the animal's chest, compressed. This compression, against the pressure of the spring (12), is made possible due to the fact that the restraining rod (13) of the restraining device (15) is able to move upward through the opening (14). When the spring (12) of the measuring element (5) is compressed, the measuring tape (6) is pulled tight around the animal's chest.
If the sliding part (4) has been pressed completely into the casing (3), the bottom (19) of the casing will be pressed onto the pressure pad (18) of the restraining device (15). The measuring element (5) can now move in both an upward and downward direction. The actual measurement now takes place when the device is removed from the animal so that the pressure pad (18) moves off the casing and thereby fixes the value on the measuring element.

The scale (20) on the measuring element (5) which can be read off through the display window (11) in the sliding part (4) indicates the value which has been measured..

## Claims

1. Device for the measurement of chest circumference of an animal consisting of a tubular frame which is placed around the animal with a casing in which a display, a measuring tape and the means to pull this measuring tape tight **characterised in that** the device consists of a fixed arch (1) which is large enough to encompass even the heaviest of animals and where both end points of the arch are fitted with hinged extensions (2) and the casing (3) is fitted with a sliding part (4) which has the sole function, when the animal measuring device is placed behind the animal's shoulders and the plate (9) of the sliding part (4) has been placed on the animals back, and the entire device has subsequently been pushed downwards, the hinged arms (2) will automatically be pulled upwards and towards each other by the measuring tape (6) so that both ends of the measuring tape (6) are brought together under the breastbone of the animal and in this fashion the measuring tape is laid on the chest without friction or the risk of constriction.

2. Device according to conclusion 1. **characterised in that** a measuring element (5) is located in the sliding part (4) which is, in turn, also adjustable within the sliding part (4) and is maintained at the highest possible value by a spring (12) while the measuring tape (6) is positioned over the measuring element (5) so that when the device is placed over the animal, the measuring element (5) - depending on the chest circumference of the pig - moves downward against the pressure of the spring (12) to a greater or lesser extent pulling the measuring tape (6) tight so that the measurement is made and the sliding part (4) in which the measuring element (5) slides is fitted with, for example, a display window (11) through which the value on the measuring element (5) within the sliding part (4) can be read off and therefore also the related weight of the animal.

3. Device according to conclusions 1 and 2 **characterised in that** the measuring element (5) is fitted with a restraining and release mechanism consisting of a restraining rod (13) which is part of the measuring element (5) and which can move through an opening (14) in the restraining device (15) and where the restraining device (15) is fitted on the other side with a pressure pad (18) and a spring part (17) and where this spring (17) positions the restraining device (15) in such a way that the restraining rod (13) can only move in a downward direction through the opening (14) so that the measuring element (5) can only be pulled downward against the pressure of the spring (12) by the measuring tape (6) when measuring an animal while the restraining rod (13) can only move upwards if the sliding part (4) in which the measuring element (5) is located has been completely pushed into the casing (3) and the bottom (19) of the casing (3) presses the pressure pad (18) of the restraining device (15) against the pressure of the spring (17) and brings the restraining device (15) into such a position in relation to the opening (14) that the restraining rod (13) is not subject to any friction and, if necessary, can also move upwards so that the measuring tape (6) can be positioned around the animals chest by the measuring element (5) following which the pig farmer has the opportunity to judge whether the device is positioned correctly on the animal and then, by simply lifting the device upwards and allowing the sliding part (4) to be pulled slightly out of the casing whereby the pressure pad (18) of the restraining device (15) is released from the casing (3) fixing the measuring element (5) and giving the pig farmer every opportunity to read the measurement value once the device has been removed from the animal.

4. Device according to conclusions 1, 2 and 3 **characterised in that** the measuring tape (6) is made from spring steel resulting in increased strength which prevents the measuring tape becoming entangled and ensures that the measuring tape is laid around the pig in a straight line so that the shortest line is always measured.
